(19) Europäisches Patentamt
European Patent Office
Office européen des brevets

(11) Veröffentlichungsnummer : **0 088 271**
**B1**

(12) # EUROPÄISCHE PATENTSCHRIFT

(45) Veröffentlichungstag der Patentschrift : **30.07.86**

(51) Int. Cl.⁴ : **C 09 B 67/26**, C 09 B 41/00, C 09 B 45/01

(21) Anmeldenummer : **83101615.9**

(22) Anmeldetag : **21.02.83**

(54) **Verfahren zur Herstellung konzentrierter, wasserhaltiger Lösungen von Chromkomplexen sulfogruppenhaltiger Azo- und/oder Azomethinfarbstoffe.**

(30) Priorität : **06.03.82 DE 3208141**

(43) Veröffentlichungstag der Anmeldung : **14.09.83 Patentblatt 83/37**

(45) Bekanntmachung des Hinweises auf die Patenterteilung : **30.07.86 Patentblatt 86/31**

(84) Benannte Vertragsstaaten : **CH DE FR GB LI**

(56) Entgegenhaltungen :
**EP-A- 0 017 114**
**EP-A- 0 019 152**
**DE-A- 2 033 989**
**FR-A- 1 559 025**
**FR-A- 2 174 161**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Linhart, Karl, Dr.**
**Heymannstrasse 65**
**D-5090 Leverkusen 1 (DE)**
Erfinder : **Gleinig, Harald, Dr.**
**Eichholzer Weg 100**
**D-5068 Odenthal (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 088 271 B1

Jouve, 18, rue St-Denis, 75001 Paris, France

**Beschreibung**

Gegenstand der Erfindung ist ein Verfahren zur Herstellung konzentrierter, wasserhaltiger Lösungen der Chromkomplexe von Farbstoffen der Formel

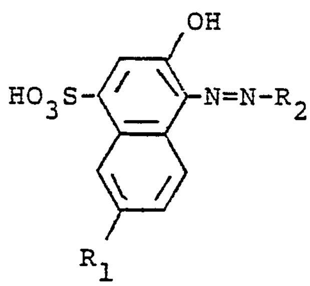

mit $R_1 = H, NO_2$

$R_2 =$

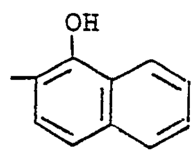

oder

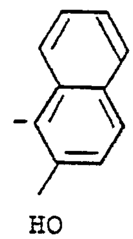

bzw. deren Alkalisalzen durch alkalische Kupplung und folgende Metallisierung.

Das Verfahren ist dadurch gekennzeichnet, daß Kupplung und Metallisierung ohne Zwischenisolierung in wäßrigem Medium durchgeführt werden, das 2-25 Gew.-% eines Lactams der Formel

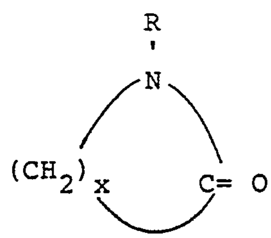

mit $x = 3\text{-}11$ und $R = CH_3$ oder H
sowie eine organische Base und/oder Ammoniak und keine weiteren wassermischbaren Lösungsmittel enthält.

Bevorzugte Lösungen enthalten (bezogen auf das Gewicht des Lösungsmittelgemisches) 2-15 % Lactam, insbesondere Pyrrolidinon sowie 98-85 % Wasser.

Die Kupplung erfolgt in an sich bekannter Weise bei pH-Werten von etwa 8-10, vorzugsweise etwa 8-9.

Die Einstellung des pH-Wertes bei der Kupplung erfolgt dabei durch Zugabe von Ammoniak oder organischen Basen, insbesondere Mono-, Di- oder Trialkanolaminen, insbesondere den entsprechenden Ethanolaminen oder deren quartären Basen.

Im Falle der Herstellung von Komplexen auf Basis der Farbstoffe I wird die Kupplung bei Verwendung des entsprechenden inneren Diazoniumsalzes unter Verwendung von etwa 1-3 Mol organischer Base und/oder Ammoniak pro Mol Diazoniumsalz durchgeführt.

Die Chromierung erfolgt dabei bei Verwendung des Systems Bichromat-Reduktionsmittel vorzugsweise bei Anfangs pH-Werten < 9, vorzugsweise 8-8,5, bei etwa 60-120 °C, insbesondere 70-90 °C.

Eine ggf. nach der Kupplung erforderliche pH-Korrektur erfolgt durch Zugabe basischer Verbindungen insbesondere Alkalihydroxiden, Alkalicarbonaten oder Alkalibicarbonaten, Ammoniak oder organischen Basen.

Die Chromierung erfolgt mit bekannten Chromierungsmitteln : Cr-III-salze wie Cr-III-fluorid, -chlorid, -sulfat, -formiat oder -acetat oder Cr-VI-salze + Reduktionsmittel : Na-, K-, Li-Dichromat + Traubenzucker nach bekannten Verfahren.

Vorzugsweise verwendet man äquivalente Menge Chromierungsmittel. Das neue Verfahren liefert in einfacher Weise konzentrierte, stabile Lösusngen, die sich hervorragend zum Färben von natürlichen und synthetischen Polyamiden, insbesondere auch Wolle und Leder eignen.

Aus EP-A 19 152 und FR-A 1 559 025 waren bereits Verfahren zur Herstellung von Lösungen von Metallkomplexfarbstoffen bekannt, die jedoch zwingend Glykole oder Glykolether enthalten. Es war daher überraschend, daß das Verfahren nur mit Lactamen in Abwesenheit von Glykolen durchgeführt werden kann.

## Beispiel 1

4 320 g β-Naphthol (30 Mol) werden in einer Mischung aus 6 277 ml = 5 712 g $NH_3$ 25 %ige Lösung (84 Mol), 7 740 g Pyrrolidinon und 35 000 g Wasser gelöst (pH 12). Die Lösung wird auf etwa 15 °C abgekühlt. Im Verlauf von 2 Stunden werden 14 334 g 6-Nitro-2-naphthochinon-1-diazid-4-sulfonsäure 61,8 %ig = 30 Mol zugesetzt. Der pH wird dabei falls erforderlich mit $NH_3$ auf 8,5 eingestellt. Die Lösung wird innerhalb von 20 Minuten zum Rückfluß erhitzt. Dann läßt man innerhalb von 15 Minuten eine Mischung aus 2 232 g $Na_2Cr_2O_7 \cdot 2H_2O$ (7,5 Mol), 1 500 g Traubenzucker und 6 000 ml Wasser zulaufen und hält etwa 60 Minuten auf Rückflußtemperatur. Man erhält eine klare, stabile Farbstofflösung.

Unter gleichen Reaktionsbedingungen erhält man bei Verwendung von β-Naphthol und 2-Naphthochinon-1-diazid-4-sulfonsäure ebenfalls eine stabile, konzentrierte Lösung des Chromkomplexes, die praktisch kein freies Chrom mehr enthält. Auch bei Verwendung von 84 Mol Triethanolamin bei der Kupplung anstelle von 84 Mol $NH_3$ erhält man stabile, praktisch Chrom-freie Lösungen. Die gegebenenfalls erforderliche pH-Einstellung für die Metallisierungsreaktion kann dabei auch mit NaOH, KOH, LiOH oder den entsprechenden Carbonaten erfolgen.

**Patentansprüche**

1. Verfahren zur Herstellung konzentrierter, wasserhaltiger Lösungen der Chromkomplexe von Farbstoffen der Formel

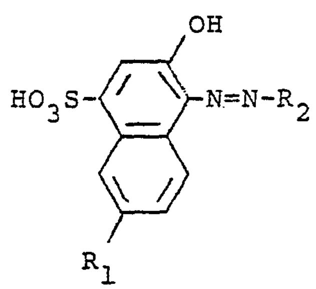

mit

$R_1$ = H, $NO_2$

$R_2$ =

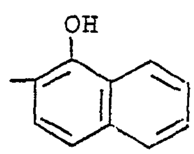

oder

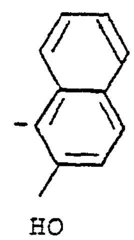

bzw. deren Alkalisalzen durch alkalische Kupplung und folgende Metallisierung, dadurch gekennzeichnet, daß Kupplung und Metallisierung ohne Zwischenisolierung in wäßrigem Medium durchgeführt werden, das 2-25 Gew.-% eines Lactams der Formel

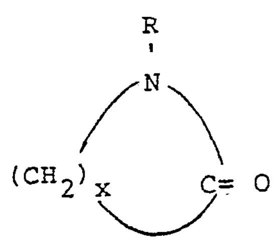

mit x = 3-11 und R = $CH_3$ oder H

sowie eine organische Base und/oder Ammoniak und keine weiteren wassermischbaren Lösungsmittel enthält.

2. Verfahren nach Anspruch 1, dadurch gekennzeichnet, daß die Lösungen 2-15 Gew.-% eines Lactams und 85-98 Gew.-% Wasser enthalten.

3. Verfahren nach Ansprüchen 1-2, dadurch gekennzeichnet, daß man mit äquivalenten Mengen chromabspaltender Verbindungen chromiert.

4. Verfahren nach Ansprüchen 1-3, dadurch gekennzeichnet, daß man bei Anfangs-pH-Werten $< 9$ bei etwa 60-120 °C chromiert.

5. Verfahren nach Anspruch 4, dadurch gekennzeichnet, daß man den pH-Wert mit Alkalihydroxiden oder Alkalicarbonaten insbesondere Natrium- und/oder Lithiumhydroxid bzw. -carbonat einstellt.

## Claims

1. Process for the preparation of concentrated aqueous solutions of the chromium complexes of dyestuffs of the formula

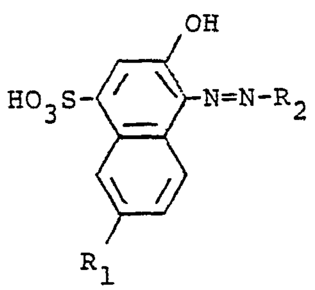

in which
$R_1$ = H or $NO_2$
$R_2$ =

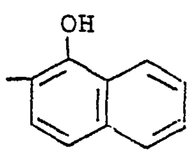

or

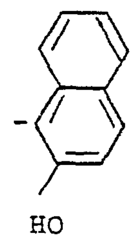

or of alkali metal salts thereof, by alkaline coupling and subsequent metallisation, characterised in that the coupling and metallisation are carried out without intermediate isolation in an aqueous medium which contains 2-25 % by weight of a lactam of the formula

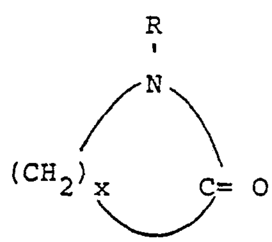

in which x = 3-11 and R = $CH_3$ or H,
and an organic base and/or ammonia and no further water-miscible solvents.

2. Process according to Claim 1, characterised in that the solutions contain 2-15 % by weight of a lactam and 85-98 % by weight of water.

3. Process according to Claims 1-2, characterised in that chroming is carried out with equivalent quantities of chromium-donating compounds.

4. Process according to Claims 1-3, characterised in that chroming is carried out at about 60-120 °C at initial pH values of $< 9$.

5. Process according to Claim 4, characterised in that the pH value is set using alkali metal hydroxides or alkali metal carbonates, in particular sodium and/or lithium hydroxide or carbonate.

## Revendications

1. Procédé de production de solutions aqueuses concentrées des complexes de chrome de colorants de formule

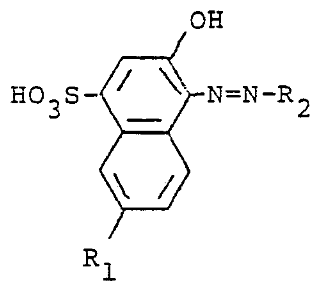

dans laquelle $R_1$ représente H, $NO_2$

$R_2$ représente

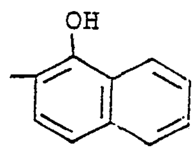 ou 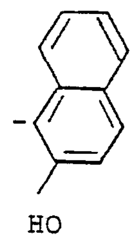

et de leurs sels alcalins par copulation alcaline suivie d'une métallation, caractérisé en ce qu'on conduit la copulation et la métallation sans isolement intermédiaire dans un milieu aqueux qui contient 2 à 25 % en poids d'un lactame de formule

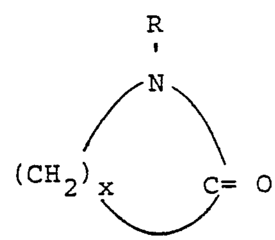

dans laquelle x a une valeur de 3 à 11 et R représente $CH_3$ ou H ainsi qu'une base organique et/ou de l'ammoniac et qui ne contient pas d'autres solvants miscibles à l'eau.

2. Procédé suivant la revendication 1, caractérisé en ce que les solutions contiennent 2 à 15 % en poids d'un lactame et 85 à 98 % en poids d'eau.

3. Procédé suivant les revendications 1-2, caractérisé en ce qu'on effectue l'introduction de chrome avec des quantités équivalentes de composés cédant du chrome.

4. Procédé suivant les revendications 1-3, caractérisé en ce qu'on effectue l'introduction de chrome à des valeurs intiales de pH inférieures à 9 à une température d'environ 60 à 120 °C.

5. Procédé suivant la revendication 4, caractérisé en ce qu'on règle la valeur de pH avec des hydroxydes alcalins ou des carbonates alcalins, notamment de l'hydroxyde ou du carbonate de sodium et/ou de lithium.